# EUROPEAN PATENT APPLICATION

(11) **EP 2 472 884 A2**
(43) Date of publication of application: **04.07.2012**
(21) Application number: 11164563.6
(22) Date of filing: 03.05.2011
(51) Int. Cl.: H04N 13/04

(54) **3D glasses with adjusting device for allowing user to adjust degrees of crosstalk and brightness and related 3D display system**

(30) Priority: 29.12.2010 TW 099146581
(71) Applicant: AU Optronics Corporation, Hsinchu 300 (TW)
(72) Inventor: Shiau, Yi-Hau, Hsin-Chu 300 (TW); Kung, Li-Wei, Hsin-Chu 300 (TW)
(74) Representative: Becker Kurig Straus

(57) **Abstract**

3D glasses utilized in a 3D display system include: a first glass, a second glass, a control device, a power supply unit, and an adjusting device. The first glass is utilized for receiving left eye images. The second glass is utilized for receiving right eye images. The control device includes: a duty cycle unit and a control unit. The duty cycle unit is utilized for providing a duty cycle, and the control unit is utilized for controlling whether the first glass and the second glass are pervious to light or not. The power supply unit is coupled to the control device, and utilized for providing power. The adjusting device is coupled to the control device, and utilized for adjusting the duty cycle provided by the duty cycle unit according to a user input.

## Description

### Field of the Invention

This invention relates to three-dimensional (3D) glasses and a 3D display system capable of allowing a user to adjust degrees of cross talk and brightness freely according to the pre-characterizing clauses of claims 1 and 8.

### Background of the Invention

A principle of 3D image presentation is to respectively transmit a left-eye image and a right-eye image to the left eye and the right eye. Due to a viewing angle difference between the left eye and the right eye, images received by the left eye and the right eye combine to become a superimposed 3D image with scene depth and sense of gradation in a user's brain. The 3D glasses utilized in 3D display systems usually include polarizing glasses, shutter glasses, and anaglyph glasses. In the following, the principle of the commonly used shutter glasses is detailed.

The principle of shutter glasses is to sequentially switch on/off shutter lens, alternating between a left-eye shutter lens and a right-eye shutter lens. When the right-eye shutter lens is switched on, an image for the right eye is synchronously output on a screen; when the left-eye shutter lens is switched on, an image for the left eye is synchronously output on the screen. However, in traditional 3D display systems, some crosstalk and brightness problems that the user cannot control will occur between the shutter glasses and the display device.

### Summary of the Invention

This in mind, the invention aims at providing 3D glasses and a 3D display system capable of allowing a user to adjust degrees of crosstalk and brightness.

This is achieved by 3D glasses and a 3D display system according to claims 1 and 8, respectively.

The dependent claims pertain to corresponding further developments and improvements.

As will be seen more clearly from the detailed description below, the 3D glasses include a first lens, a second lens, a control device, a power supply unit and an adjusting device. The first lens is utilized for receiving left-eye images. The second lens is utilized for receiving right-eye images. The control device is coupled to the first lens and the second lens, and includes: a duty cycle unit and a control unit. The duty cycle unit is utilized for providing a duty cycle, and the control unit is utilized for controlling whether the first lens and the second lens are pervious to light or not according to the duty cycle. The power supply unit is coupled to the control device, and utilized for providing power. The adjusting device is coupled to the control device, and utilized for adjusting the duty cycle provided by the duty cycle unit according to a user input.

The 3D display system includes a display device and shutter glasses. The display device is utilized for displaying a left-eye image and a right-eye image according to a specific duty cycle. The shutter glasses include: a first lens, a second lens, a control device, a power supply unit and an adjusting device. The first lens is utilized for receiving left-eye images. The second lens is utilized for receiving right-eye images. The control device is coupled to the first lens and the second lens, and includes: a duty cycle unit and a control unit. The duty cycle unit is utilized for providing a duty cycle, and the control unit is utilized for controlling whether the first lens and the second lens are pervious to light or not according to the duty cycle. The power supply unit is coupled to the control device, and utilized for providing power. The adjusting device is coupled to the control device, and utilized for adjusting the duty cycle provided by the duty cycle unit according to a user input.

The 3D glasses and 3D display system disclosed in the present invention are capable of allowing a user to adjust degrees of crosstalk and brightness freely. Therefore, the present invention has the advantage of allowing a user to configure an optimized preference setting easily.

These and other objectives of the present invention will no doubt become obvious to those of ordinary skill in the art after reading the following detailed description of the preferred embodiment that is illustrated in the various figures and drawings.

### Brief Description of the Drawings

In the following, the invention is further illustrated by way of example, taking reference to the following drawings. Thereof:
- FIG. 1: is a simplified block diagram illustrating a 3D display system according to an exemplary embodiment of the present invention;
- FIG. 2: is a perspective view of the 3D glasses according to a first exemplary embodiment of the present invention;
- FIG. 3: is a perspective view of the 3D glasses according to a second exemplary embodiment of the present invention;
- FIG. 4: is a perspective view of the 3D glasses according to a third exemplary embodiment of the present invention;
- FIG. 5: is a diagram illustrating the specific duty cycle of the display device, one duty cycle of the first lens and the second lens within the 3D glasses, and images received by user's eyes;
- FIG. 6: is a diagram illustrating the specific duty cycle of the display device, another duty cycle of the first lens and the second lens within the 3D glasses, and other images received by user's eyes; and
- FIG. 7: is a diagram illustrating the specific duty cycle of the display device, yet another duty cycle of the first lens and the second lens within the 3D glasses, and yet more images received by user's eyes.

### Detailed Description

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is electrically connected to another device, that connection may be through a direct electrical connection, or through an indirect electrical connection via other devices and connections.

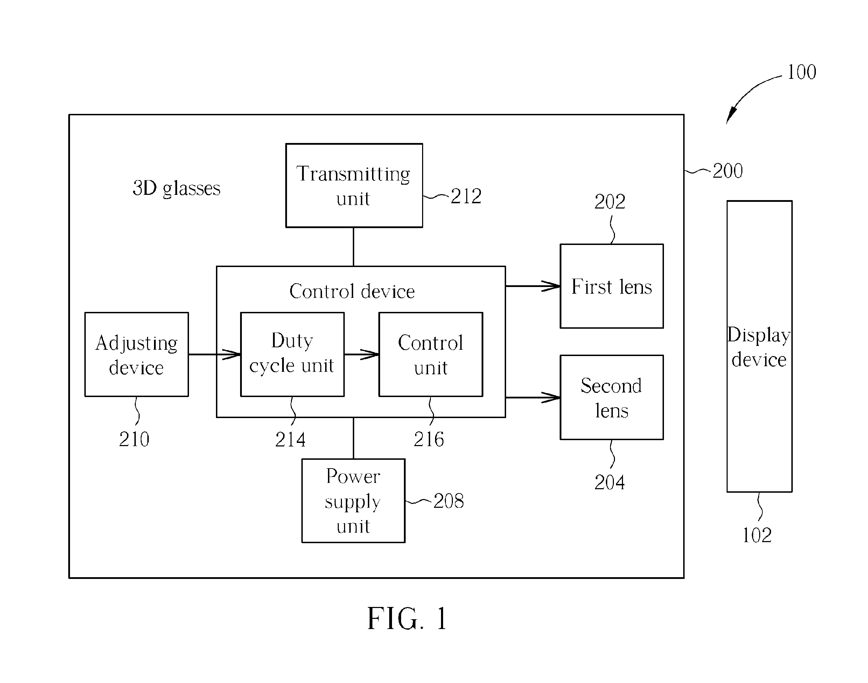

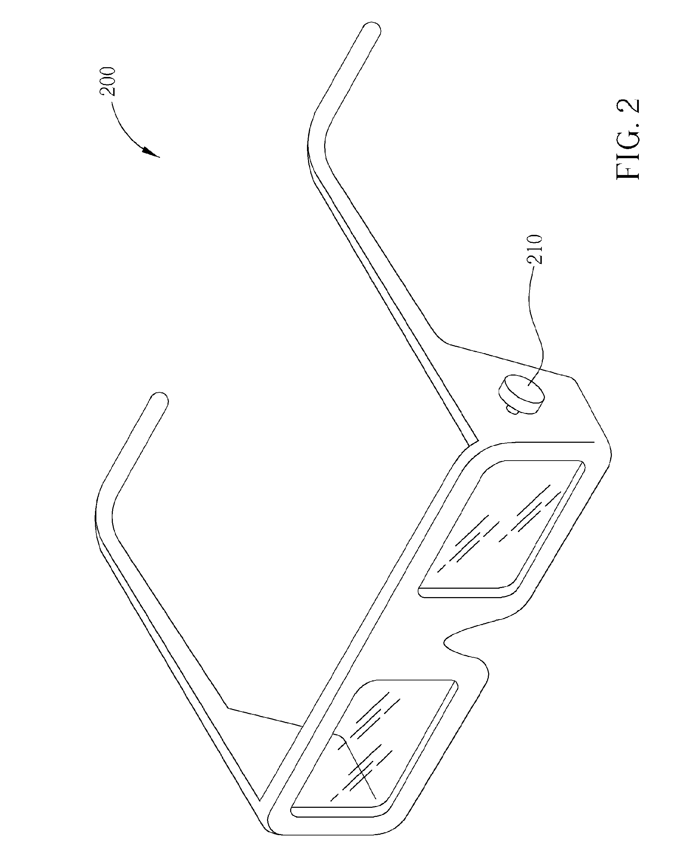

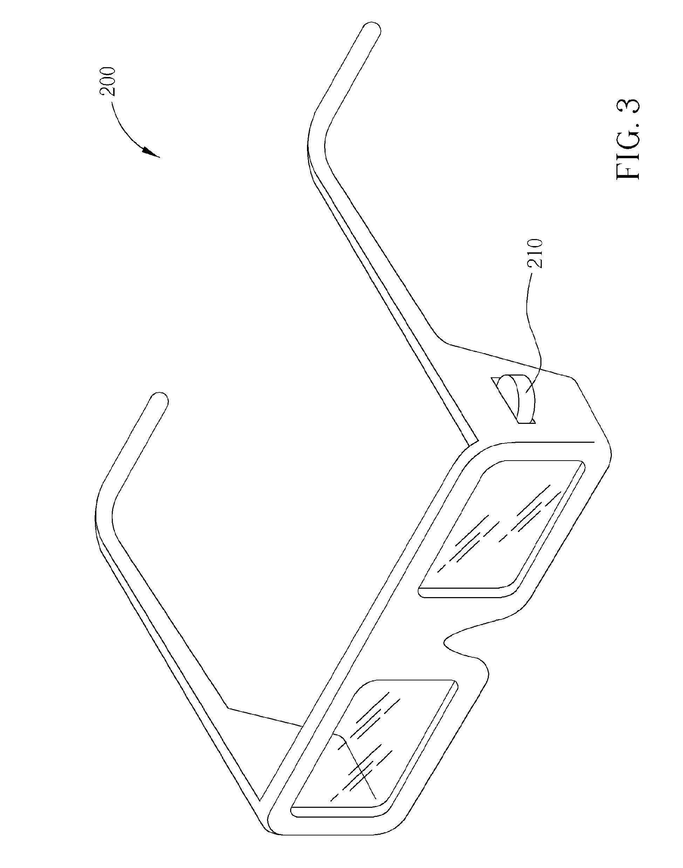

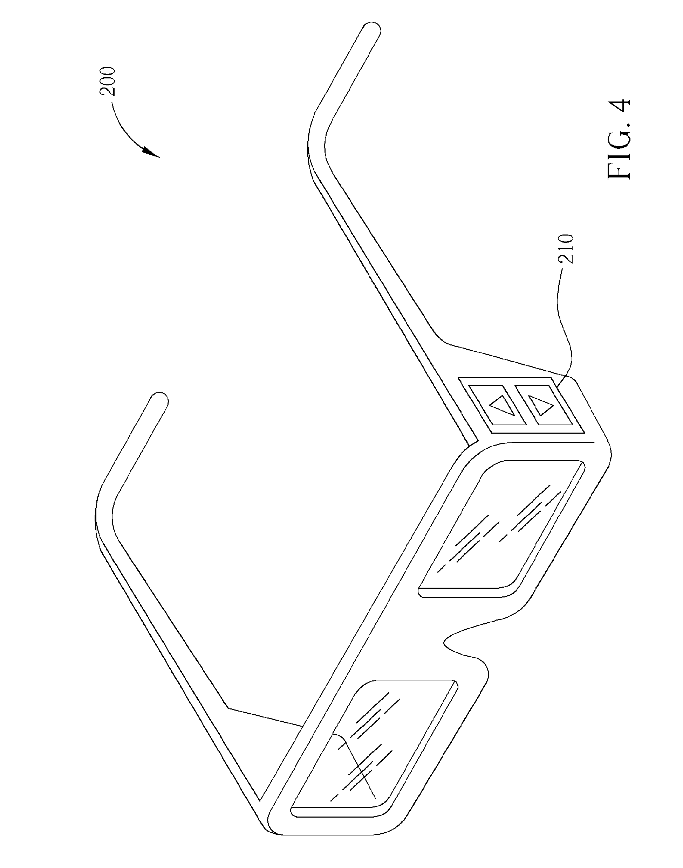

Please refer to FIG. 1, which is a simplified block diagram illustrating a 3D display system 100 according to an exemplary embodiment of the present invention. As shown in FIG. 1, the 3D display system 100 includes a display device 102 and 3D glasses 200, wherein the display device 102 is utilized for displaying a left-eye image and a right-eye image according to a specific duty cycle. The display device 102 may be selected from a variety of display devices such as a liquid crystal display (LCD) device, a plasma display device and a projector. The 3D glasses 200 may be shutter glasses, and include a first lens 202, a second lens 204, a control device 206, a power supply unit 208, an adjusting device 210 and a transmitting unit 212. The first lens 202 is utilized for receiving left-eye images, and the second lens 204 is utilized for receiving right-eye images, wherein the first lens 202 and the second lens 204 respectively include light valve layers, such as liquid crystal layers or electrophoresis layers. The control device 206 is coupled to the first lens 202 and the second lens 204, and includes a duty cycle unit 214 and a control unit 216. The duty cycle unit 214 is utilized for providing a duty cycle, and the control unit 216 is utilized for controlling the first lens 202 and the second lens 204 whether to be pervious to light or not according to the duty cycle. The power supply unit 208 is coupled to the control device 206, and utilized for providing power, wherein the power supply unit 208 may be a battery, e.g., a lithium battery or a solar battery. The adjusting device 210 is coupled to the control device 206, and utilized for adjusting the duty cycle provided by the duty cycle unit 214 according to a user input. Please refer to FIG. 2 and FIG. 3. FIG. 2 is a perspective view of 3D glasses 200 according to a first exemplary embodiment of the present invention. FIG. 3 is a perspective view of 3D glasses 200 according to a second exemplary embodiment of the present invention. As shown in FIG. 2 and FIG. 3, the adjusting device 210 may be a knob. Please refer to FIG. 4, which is a perspective view of 3D glasses 200 according to a third exemplary embodiment of the present invention. As shown in FIG. 4, the adjusting device 210 may include two buttons.

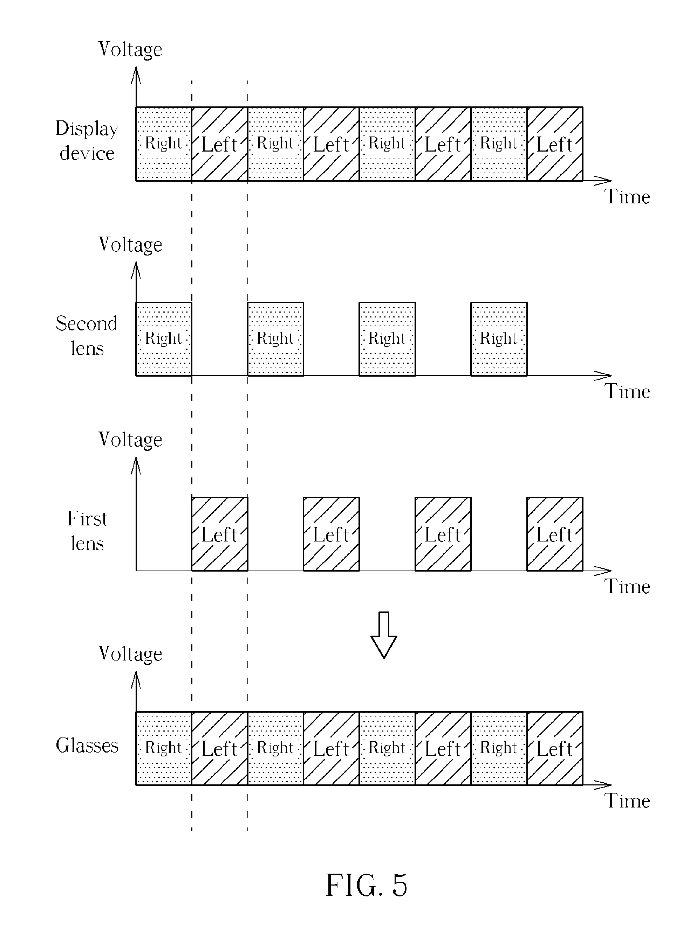

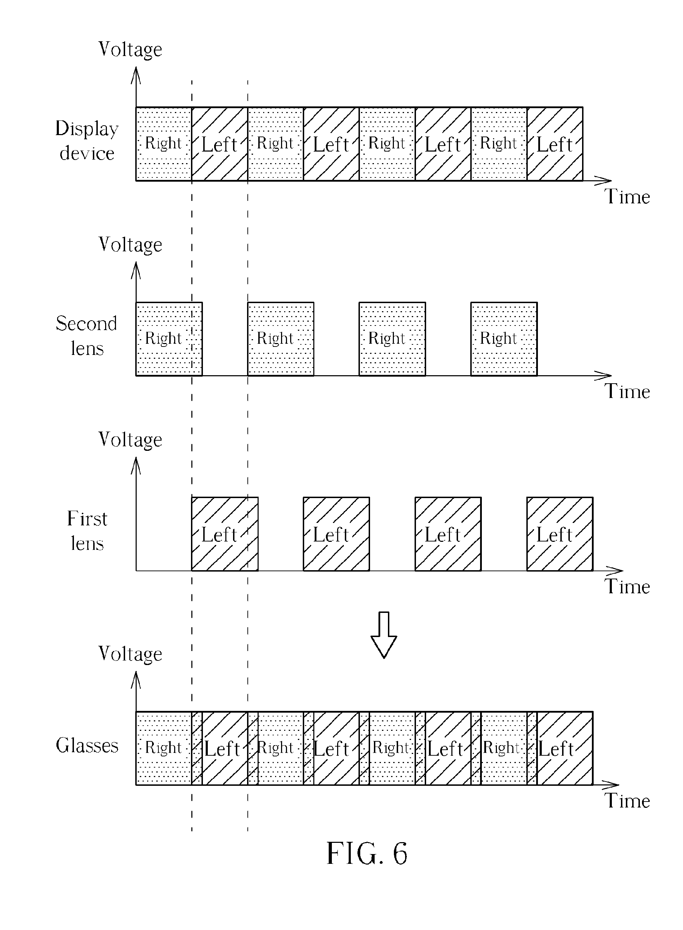

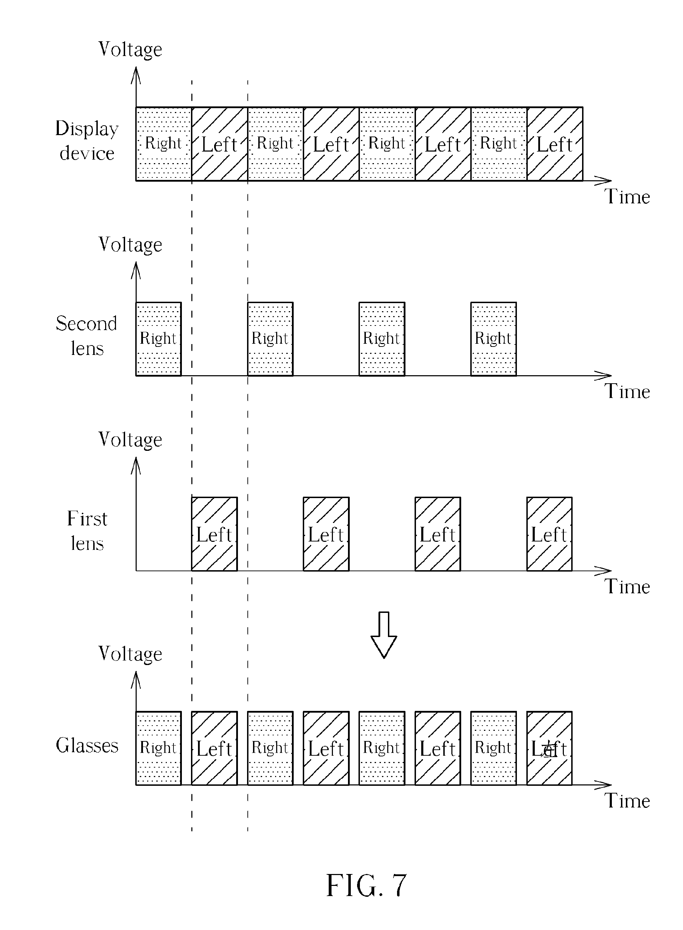

Please refer to FIG. 5, FIG. 6 and FIG. 7. FIG. 5 is a diagram illustrating the specific duty cycle of the display device, one duty cycle of the first lens and the second lens within the 3D glasses, and images received by user's eyes. FIG. 6 is a diagram illustrating the specific duty cycle of the display device, another duty cycle of the first lens and the second lens within the 3D glasses, and other images received by user's eyes. FIG. 7 is a diagram illustrating the specific duty cycle of the display device, yet another duty cycle of the first lens and the second lens within the 3D glasses, and yet more images received by user's eyes. As shown in FIG. 5, when a user wants to see an image that has a general brightness without crosstalk, the user may adjust the duty cycle provided by the duty cycle unit 214 to be identical to the specific duty cycle of the display device 102 by controlling the adjusting device 210. So, when the display device 102 displays a right-eye image according to the specific duty cycle, the control unit 216 controls the first lens 202 to be impervious to light and the second lens 204 to be pervious to light according to the duty cycle which is identical to the specific duty cycle. When the display device 102 displays a left-eye image according to the specific duty cycle, the control unit 216 controls the first lens 202 to be pervious to light and the second lens 204 to be impervious to light according to the duty cycle which is identical to the specific duty cycle. At this moment, the user's eyes will see an image that has the general brightness without crosstalk.

As shown in FIG. 6, when the user feels that the brightness of the image is not high enough, the user may adjust the duty cycle provided by the duty cycle unit 214 to be longer than the specific duty cycle of the display device 102 by controlling the adjusting device 210. So, when the display device 102 displays a right-eye image and a left-eye image according to the specific duty cycle, the control unit 216 controls whether the first lens 202 and the second lens 204 are pervious to light or not according to the longer duty cycle. At this moment, the first lens 202 and the second lens 204 both will be pervious to light in a certain period of time, so the user's eyes will see an image that has a higher brightness at the expense of some crosstalk.

As shown in FIG. 7, when the user feels that the brightness of the image is not low enough, the user may adjust the duty cycle provided by the duty cycle unit 214 to be shorter than the specific duty cycle of the display device 102 by controlling the adjusting device 210. So, when the display device 102 displays a right-eye image and a left-eye image according to the specific duty cycle, the control unit 216 controls whether the first lens 202 and the second lens 204 are pervious to light or not according to the shorter duty cycle. At this moment, the first lens 202 and the second lens 204 both will be impervious to light in a certain period of time, so the user's eyes will see an image that has a lower brightness without crosstalk.

Moreover, the user may also select the transmitting unit 212 to receive a synchronization signal from the display device 202 and transmit a duty cycle control signal to the display device 202, wherein the transmitting unit 212 may perform wired communications or wireless communications. At this moment, the control unit 216 may further control whether the first lens 202 and the second lens 204 are pervious to light or not according to the synchronization signal. In other words, the user's eyes may see an image that has a general brightness without crosstalk, as shown in FIG. 5. Moreover, please note that the aforementioned exemplary embodiment is for illustrative purposes only, and is not meant to be a limitation of the present invention. For example, in another exemplary embodiment of the present invention, the transmitting unit 212 may be omitted in order to decrease the cost and weight of the 3D glasses.

Briefly summarized, the 3D glasses and the 3D display system disclosed in the present invention are capable of allowing the user to adjust degrees of crosstalk and brightness freely. Therefore, the present invention has the advantage of allowing the user to configure an optimized preference setting easily.

Those skilled in the art will readily observe that numerous modifications and alterations of the device and method may be made while retaining the teachings of the invention. Accordingly, the above disclosure should be construed as limited only by the metes and bounds of the appended claims. All combinations and sub-combinations of the above-described features also belong to the invention.

## Claims

1. Three-dimensional (3D) glasses (200), comprising:
a first lens (202), utilized for receiving left-eye images;
a second lens (204), utilized for receiving right-eye images;
and **characterized by**:
a control device (206), coupled to the first lens (202) and the second lens (204), comprising:
a duty cycle unit (214), utilized for providing a duty cycle; and
a control unit (216), utilized for controlling whether the first lens (202) and the second lens (204) are pervious to light or not according to the duty cycle;
a power supply unit (208), coupled to the control device (206), the power supply unit (208) utilized for providing power; and
an adjusting device (210), coupled to the control device (206), the adjusting device (210) utilized for adjusting the duty cycle provided by the duty cycle unit (214) according to a user input.

2. The 3D glasses (200) of claim 1, further **characterized by**:
a transmitting unit (212), utilized for receiving a synchronization signal from a display device (102) and transmitting a duty cycle control signal to the display device (102), wherein the transmitting unit (212) performs wired communications or wireless communications.

3. The 3D glasses (200) of claim 2, **characterized in that** the control unit (216) is further utilized for controlling whether the first lens (202) and the second lens (204) are pervious to light or not according to the synchronization signal.

4. The 3D glasses (200) of claim 1, **characterized in that** the adjusting device (210) is a knob.

5. The 3D glasses (200) of claim 1, **characterized in that** the adjusting device (210) comprises at least one button.

6. The 3D glasses (200) of claim 1, **characterized in that** the first lens (202) and the second lens (204) respectively comprise light valve layers.

7. The 3D glasses (200) of claim 1, **characterized in that** the power supply unit (208) is a battery.

8. A three-dimensional (3D) display system (100), **characterized by**:
a display device (102), utilized for displaying left-eye images and right-eye images according to a specific duty cycle; and
shutter glasses (200), comprising:
a first lens (202), utilized for receiving the left-eye images;
a second lens (204), utilized for receiving the right-eye images;
a control device (206), coupled to the first lens (202) and the second lens (204), comprising:
a duty cycle unit (214), utilized for providing a duty cycle; and
a control unit (216), utilized for controlling whether the first lens (202) and the second lens (204) are pervious to light or not according to the duty cycle;
a power supply unit (208), coupled to the control device (206), the power supply unit (208) utilized for providing power; and
an adjusting device (210), coupled to the control device (206), the adjusting device (210) utilized for adjusting the duty cycle provided by the duty cycle unit (214) according to a user input.

9. The 3D display system (100) of claim 8, **characterized in that** the display device (102) is further utilized for generating a synchronization signal according to the specific duty cycle, and the shutter glasses (200) further comprise:
a transmitting unit (212), utilized for receiving the synchronization signal from the display device (102) and transmitting a duty cycle control signal to the display device (102), wherein the transmitting unit (212) performs wired communications or wireless communications.

10. The 3D display system (100) of claim 9, **characterized in that** the control device (206) is further utilized for controlling whether the first lens (202) and the second lens (204) are pervious to light or not according to the synchronization signal.

11. The 3D display system (100) of claim 8, **characterized in that** the adjusting device (210) is a knob.

12. The 3D display system (100) of claim 8, **characterized in that** the adjusting device (210) comprises at least one button.

13. The 3D display system (100) of claim 8, **characterized in that** the first lens (202) and the second lens (204) respectively comprise light valve layers.

14. The 3D display system (100) of claim 8, **characterized in that** the power supply unit (208) is a battery.
